# EUROPEAN PATENT APPLICATION

(11) **EP 1 683 987 A1**
(43) Date of publication of application: **26.07.2006**
(21) Application number: 05028760.6
(22) Date of filing: 30.12.2005
(51) Int. Cl.: F16D 66/02, F16D 66/00

(54) **Brake lining wear indicator**

(30) Priority: 24.01.2005 US 41765
(71) Applicant: International Truck Intellectual Property Company, LLC., Warrenville, IL 60555 (US)
(72) Inventor: Lovell, Steven R., Fort Wayne, Indiana 46845 (US)
(74) Representative: Kuhnen & Wacker

(57) **Abstract**

A motor vehicle has a wheel (10) and a brake for braking the wheel. The brake has a pad or lining (24) of friable material that progressively wears with use of the brake. This wear creates dust. By providing the friable material with multiple colored lamina (26, 28, 30), each of its own distinctive color, and by disposing the friction element sufficiently close to a part of the wheel (20) that revolves as the wheel turns, such as the wheel rim, collected dust is openly visible to a person looking at the wheel. The color of the dust indicates the extent of pad or lining wear.

## Description

### Field of the Invention

This invention relates to friction brakes of motor vehicle wheels, particularly to an indicator for visually indicating wear of brake linings without having to remove wheel parts.

### Background and Summary of the Invention

U.S. Patent Nos. 3,056,380 and 3,138,224 disclose brake shoes having linings that contain multiple colored lamina. As a lining wears, the color of the lining face changes, and a person looking at it will immediately know to what extent the lining is worn. Observation of the extent of wear can be made either by removal of parts of the wheel or looking through an observation opening.

Other patents disclose diverse schemes for indicating brake lining wear. A number of them are electromechanical or electronic in nature and provide wear information without having to actually observe the lining.

The inventions of U.S. Patent Nos. 3,056,380 and 3,138,224 are an economical way to provide lining wear indication because all that is necessary is to provide distinctive coloring for the respective lamina. However as a practical matter, observation of the indicator may be inconvenient even if wheel parts do not have to be removed.

Electromechanical and electronic wear indicators typically avoid the inconvenience of having to actually observe the lining, but they obviously are more expensive.

Accordingly, a brake lining wear indicator that is as economical as those of U.S. Patent Nos. 3,056,380 and 3,138,224 while avoiding inconveniences that may be associated with having to actually observe the lining, which may include removing wheel parts, would seem desirable. It is toward that objective that the present invention is directed.

A general aspect of the invention relates to a motor vehicle comprising a wheel and a brake for braking the wheel. The brake comprises a friction element comprising friable material that progressively wears with use of the brake. Wear of the friable material creates dust. The friable material comprises multiple colored lamina, each of its own distinctive color, and the friction element is disposed sufficiently close to a part of the wheel that revolves as the wheel turns, and that is openly visible to a person looking at the wheel, to collect the created dust and indicate the extent of wear by the color of the collected dust.

Another general aspect relates to a method for indicating brake pad or lining wear.

Principles of the invention, along with various features and advantages, will be seen in the following disclosure of a presently preferred embodiment of the invention depicting the best mode contemplated at this time for carrying out the invention. The disclosure includes drawings, briefly described as follows.

### Brief Description of the Drawings

Figure 1 is an somewhat schematic rendering, in circumferential view, of portions of a wheel brake relevant to explaining principles of the invention.
Figure 2 is an axial end view of a wheel and tire containing the brake of Figure 1 for completing explanation of principles of the invention.

### Description of the Preferred Embodiment

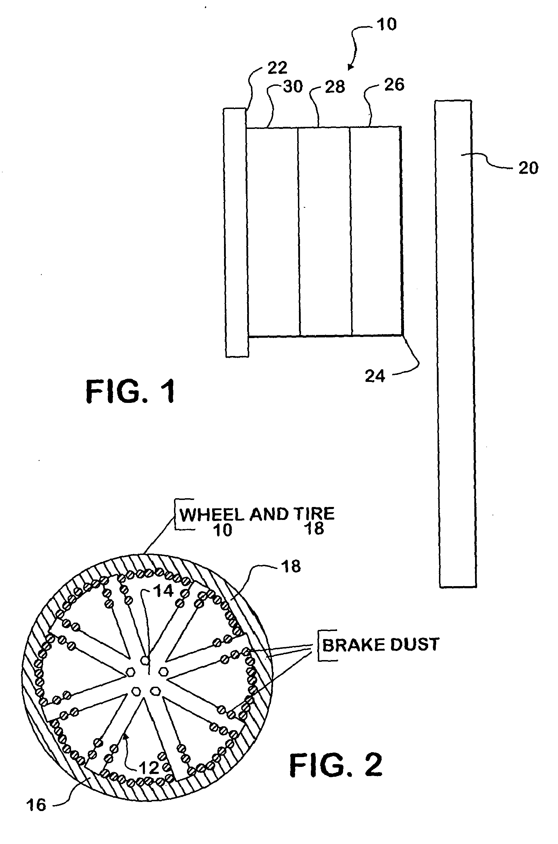

Figure 1 and 2 show portions of a motor vehicle wheel 10 relevant to disclosure of principles of the invention. Wheel 10 comprises a metal wheel assembly 12 having a central hub 14 with a tire-receiving rim 16 forming the perimeter. A pneumatic tire 18 is mounted in rim 16.

A brake mechanism is associated with wheel 10 for braking the wheel when a driver of the motor vehicle applies the brakes. Typical brake mechanisms are hydraulic- or pneumatic-actuated and may comprise shoes that act on a drum that rotates with the wheel or calipers that act on a rotor, or disc, that rotates with the wheel, the latter being commonly referred to as a disc brake.

Figure 1 shows an example of a disc brake where the rotor, or disc, is designated by the reference numeral 20 and a caliper member by the numeral 22. A brake pad 24 is mounted on a face of caliper member 22. When the brake is applied, caliper member 22 is displaced toward the rotor forcing pad 24 against rotor 20.

Pad 24 is composed of friable material, meaning material that although rather hard, will generate dust or small particulates as it gradually disintegrates with wear. By disposing pad 24 sufficiently close to rim 16, pad dust will collect on the rim in a location that is openly visible to a person looking at the wheel. This is represented pictorially in Figure 2. By also providing pad 24 with multiple colored lamina, each of its own distinctive color, the dust collected on the rim will change color depending on the extent of pad wear.

The example of Figure 1 shows three distinct lamina 26, 28, 30. Initially, only dust from lamina 26 will collect on the rim. Once lamina 26 has been worn away, dust from lamina 28 will begin to collect. After lamina 28 has been worn away, dust from lamina 30 will begin to collect.

Because the portion of the rim where dust collects is open to the environment, environmental conditions, such as precipitation, may move dust accumulation at times to a greater or a lesser degree, but because lining or pad wear occurs only gradually dust that is from a more interior lamina will likely be observed at sometime before a pad or lining becomes sufficiently worn to the point of becoming ineffective. It is desirable that each successive inner laminar be colored more prominently that a preceding one.

While a presently preferred embodiment of the invention has been illustrated and described, it should be appreciated that principles of the invention are applicable to all embodiments that fall within the scope of the following claims.

## Claims

1. A motor vehicle comprising:
a wheel;
a brake for braking the wheel and comprising a friction element comprising friable material that progressively wears with use of the brake, with wear of the friable material creating dust, wherein the friable material comprises multiple colored lamina, each of its own distinctive color, and the friction element is disposed sufficiently close to a part of the wheel that revolves as the wheel turns, and that is openly visible to a person looking at the wheel, to collect the created dust and indicate the extent of wear by the color of the collected dust.

2. A motor vehicle as set forth in claim 1 in which the brake is a disc brake and the friction element is a pad disposed on a caliper member of the brake.

3. A motor vehicle as set forth in claim 2 in which the part of the wheel that revolves as the wheel turns and is outwardly visible to a person looking at the wheel comprises a wheel rim on which a tire is mounted.

4. A motor vehicle as set forth in claim 3 in which the friction element comprises three lamina each of its own distinctive color.

5. A method for indicating wear of friable material forming a friction element that is used to brake a motor vehicle wheel, the method comprising:
providing the friable material with multiple colored lamina, each of its own distinctive color, and
disposing the friction element sufficiently close to a part of the wheel that revolves as the wheel turns and is outwardly visible to a person looking at the wheel to cause dust created by wear of the friable material to collect on the part indicate wear of the friable material wear by the color of the collected dust.

6. A method for indicating wear of friable material forming a disc brake pad that acts on a wheel rotor to brake a motor vehicle wheel, the method comprising:
providing the friable material with multiple colored lamina, each of its own distinctive color, and
disposing the pad sufficiently close to a rim of the wheel containing a pneumatic tire to cause dust created by wear of the friable material to collect on the rim in a location that is outwardly visible to a person looking at the wheel and thereby provide an indicator of pad wear by the color of the collected dust.
